# EUROPÄISCHE PATENTSCHRIFT

(11) **EP 2 718 776 B1**
(45) Veröffentlichungstag und Bekanntmachung des Hinweises auf die Patenterteilung: **11.08.2021**
(21) Anmeldenummer: 12727833.1
(22) Anmeldetag: 08.06.2012
(51) Int. Cl.: G05B 17/02

(54) **VERFAHREN UND SYSTEM ZUR SIMULATION EINES ARBEITSPROZESSES AN EINER WERKZEUGMASCHINE**
METHOD AND SYSTEM FOR SIMULATING A WORK PROCESS ON A MACHINE TOOL
PROCÉDÉ ET SYSTÈME DE SIMULATION D'UN PROCESSUS DE TRAVAIL D'UNE MACHINE-OUTIL

(30) Priorität: 09.06.2011 DE 102011105141
(43) Veröffentlichungstag der Anmeldung: 16.04.2014
(73) Patentinhaber: DMG MORI Digital GmbH, 33689 Bielefeld (DE)
(72) Erfinder: PRUSCHEK, Peter, 87459 Pfronten (DE); HAHN, Rudolf, 87645 Schwangau (DE); WILLI, Bruno, A-6943 Riefensberg (AT); TARNOFSKY, Michael, 87663 Lengenwang (DE)
(74) Vertreter: MERH-IP Matias Erny Reichl Hoffmann Patentanwälte PartG mbB
(86) Internationale Anmeldenummer: PCT/EP2012/060890
(87) Internationale Veröffentlichungsnummer: WO 2012/168427

(56) Entgegenhaltungen:
- EP-A2- 1 762 919
- WO-A1-2009/076987
- WONG Y-C ET AL: "A PARALLELISM ANALYZER FOR CONSERVATIVE PARALLEL SIMULATION", IEEE TRANSACTIONS ON PARALLEL AND DISTRIBUTED SYSTEMS, IEEE SERVICE CENTER, LOS ALAMITOS, CA, US, vol. 6, no. 6, 1 June 1995 (1995-06-01), pages 628-638, XP000507498, ISSN: 1045-9219, DOI: 10.1109/71.388043

## Beschreibung

Die Erfindung betrifft ein Verfahren und ein System zur Simulation eines Arbeitsprozesses an einer Werkzeugmaschine unter Verwendung einer virtuellen Maschine.

Führende Werkzeugmaschinenhersteller und Forschungseinrichtungen beschäftigen sich seit einigen Jahren mit dem Thema "Virtuelle Werkzeugmaschine". Ein wesentlicher Aspekt derartiger virtueller Maschinen liegt in dem Bereich des Fertigungsprozesses, wobei die Interaktion von Werkzeug Werkstück simuliert und graphisch in 3D visualisiert wird. Moderne Systeme bilden die gesamte sich bewegende Maschinenkinematik inklusive Materialabtrag während des Fertigungsprozesses am Werkstück durch die Bearbeitung mit dem Werkzeug ab.

Beispielsweise beschreibt die EP 1 901 149 B1 der Anmelderin eine Vorrichtung und ein Verfahren zur Simulation eines Ablaufs zur Bearbeitung eines Werkstücks in einer Werkzeugmaschine, das darauf ausgerichtet ist, möglichst umfassend nicht nur sämtliche Bearbeitungsvorgänge am Werkstück selbst abzubilden, sondern auch die Peripherie der Werkzeugmaschine einschließlich Werkzeugwechsler, Werkstückwechsler, Arbeitsraum etc. in einer möglichst realistischen Gesamtdarstellung zu simulieren und abzubilden.

Aus der WO 2009/076987 A1 ist ein Verfahren zur Simulation eines ablaufenden Steuerprogramms an einer Werkzeugmaschine bekannt bei dem das vollständige Steuerprogramm parallel auf verschiedene Einheiten simuliert wird, und die Ergebnisse von Teilabschnitten des Steuerprogramms zunächst mittels verschiedener Verarbeitungseinheiten getrennt ausgegeben und anschließend erst zu einer Gesamtergebnisdatenmenge zusammengeführt werden.

Im Anwendungsfall von Werkzeugmaschinen bestehen virtuelle Maschinen üblicherweise aus steuerseitigen und systemseitigen Komponenten, wobei zu den steuerungsseitigen Komponenten die Mensch-Maschine-Schnittstelle HMI (Human Machine Interface) in Form von Steuerbedienpult und Bildschirm, der numerische Steuerungskern, d.h. die Steuerungsanweisungen, die durch ein NC-Programm vorgegeben werden, und die speicherprogram-mierbare Steuerung (SPS) bzw. die programmierbare Logiksteuerung (Programmable Logic Control), d.h. die maschinenspezifische Steuerung, die in der Regel maschinengeregelte Kreise, einschließlich Zusatzaggregate wie beispielsweise Werkzeugwechsler, Kühlwasserzufuhr etc. steuert, sowie entsprechende Antriebsregler zählen, während als systemseitige Komponenten insbesondere Antriebssysteme inklusive deren kinematischem und kinetischem Verhalten (Nachgiebigkeit, Thermik) und zugehörige Regelbaugruppen, Pneumatik-/Fluidsysteme, Arbeits- und Spindelkinematik inklusive deren geometrischer Repräsentation, Spannmittel sowie Werkzeuge, Werkstücke und hiermit durchgeführte Abtragsprozesse zu nennen sind.

In vielen virtuellen Maschinen sind dabei nur Teile dieser Komponenten verwirklicht; in wenigen Fällen kommen zusätzliche Komponenten, wie zum Beispiel die geometrische Abbildung einer externen Automatisierungseinheit hinzu.

Ein wesentliches Ziel im Rahmen der Simulation lag bislang darin, die Bearbeitungs-/Bewegungsabläufe eines realen Prozesses auf der Simulationsplattform in den gleichen Schritten in Echtzeit wie bei dem realen Anwendungsfall zu durchlaufen. Hieraus ließen sich wertvolle Informationen bezüglich der tatsächlich zu erwartenden Bearbeitungsabläufe, etwa bei Inbetriebnahme einer neuen Werkzeugmaschine oder beim Einrichten der Werkzeugmaschine gewinnen. Die Ablaufgeschwindigkeit der Simulation kann dabei zum Zwecke einer genaueren Betrachtung verlangsamt oder je nach Leistungsfähigkeit der Simulationsplattform auch beschleunigt werden.

Die Simulationsgeschwindigkeit und damit die Möglichkeit, vorab über einen bestimmten Arbeitsprozess eine schnelle Aussage z.B. bezüglich Kollisionsfreiheit zu bekommen, ist gegenwärtig bei bestehenden Simulationsplattformen im Wesentlichen durch die Leistung der eingesetzten Hardware beschränkt, wobei eine Beschleunigung rein auf Basis einer Erhöhung der Taktfrequenz und der Integration neuer Hardwarefunktionen mittlerweile nur noch in begrenztem Maße erreichbar ist. Andererseits nimmt mit fortgeschrittener Werkzeugmaschinenentwicklung die Komplexität der Bearbeitungs- und Bewegungsvorgänge erheblich zu, so dass dem Ansatz einer gesamtheitlichen virtuellen Maschine zwangsläufig Grenzen gesetzt sind.

Die Erkenntnis dieser grundsätzlichen Problematik ist Ansatzpunkt der vorliegenden Erfindung, deren Aufgabe es ist, ein Verfahren und ein System zur Simulation eines Arbeitsprozesses in einer Werkzeugmaschine unter Verwendung einer virtuellen Maschine anzugeben, die eine erhöhte Simulationsgeschwindigkeit ermöglichen.

Diese Aufgabe wird in einem Verfahren mit den Merkmalen des Patentanspruchs 1 und einem System mit den Merkmalen des Patentanspruchs 6 gelöst.

Bevorzugte Ausführungsformen werden in den abhängigen Patentansprüchen beschrieben.

Die Erfindung gibt ein Verfahren an zur Simulation eines Arbeitsprozesses an einer Werkzeugmaschine unter Verwendung einer virtuellen Maschine, die dazu eingerichtet ist, anhand von Maschinendaten, Werkstückdaten und Werkzeugdaten in Abhängigkeit von NC-Steuerdaten und SPS-Steuerdaten den Arbeitsprozess an der Werkzeugmaschine zu simulieren. Erfindungsgemäß wird die Simulation des Arbeitsprozesses auf einer Plattform ausgeführt, die mehrere Prozessorkerne umfasst, wobei die Simulation des Arbeitsprozesses in Teilsimulationen durchgeführt wird, die auf unterschiedlichen Prozessorkernen parallel ablaufen.

Durch die Erfindung wird dabei eine insgesamt höher performante Simulationsumgebung in Form einer Plattform geschaffen, bei welcher die virtuelle Maschine mehrfach zeitlich parallel gestartet werden kann.

Dies beinhaltet, dass die komplette virtuelle Maschine auf mehreren unterschiedlichen Prozessorkernen installiert werden kann, die dann die Teilsimulationen durchführen. Es besteht jedoch auch die Möglichkeit, dass nur bestimmte, in der Funktionalität entsprechend reduzierte virtuelle Maschinen auf unterschiedlichen Prozessorkerne installiert und gestartet werden.

Der Zeitvorteil durch Parallelisierung ergibt sich zu: Tₚₐᵣ = T_{seq}/N + T_{seq}/N, wobei N = Anzahl der NC-Programm-Teile, C = Anzahl der CPU-Kerne bzw. VMs, T_{seq} = Zeit für sequentielle Abarbeitung und Tₚₐᵣ = Zeit für parallele Abarbeitung, unter der Annahme N = C. Beispielsweise ergibt sich für eine Parallelisierung auf 8 VMs eine Bearbeitungszeit von Tₚₐᵣ = 2/8 • T_{seq} = 0,25 • T_{seq} zzgl. Overhead.

Der erfindungsgemäße Ansatz ermöglicht es jedoch, nicht nur die Simulationsgeschwindigkeit bei einem gegebenen Arbeitsprozess mit einer bestimmten Komplexität zu erhöhen, sondern liefert darüber hinaus eine entscheidende Voraussetzung für Fortentwicklung einer gesamtheitlichen Simulation sämtlicher Arbeitsvorgänge. Entscheidend ist dabei, dass durch die erfindungsgemäße Lösung, die grundsätzlich einen anderen Weg als den der Steigerung der Rechenleistung geht, der Simulation in punkto Komplexität insoweit keine Grenzen mehr gesetzt sind, als dass erfindungsgemäß der Arbeitsprozess bzw. die Simulation des Arbeitsprozesses in Teilsimulationen zerlegt wird, die auf unterschiedlichen Prozessorkernen ablaufen.

Dabei kann die Erfindung in einer bevorzugten Ausführungsform die sogenannte Multi-Core-Technologie nutzen, indem ein Mehrkernprozessor verwendet wird, bei dem mehrere vollständige Prozessorkerne auf einem einzigen Chip integriert sind.

Die Erfindung ist jedoch nicht hierauf beschränkt und es können auch mehrere Prozessorkerne zum Einsatz kommen, die über ein Netzwerk, sei es ein lokales Netzwerk oder über das Internet, miteinander verbunden sind. Hierdurch ist es möglich, den Ort der Teilberechnungen an unterschiedlichen Stellen zu realisieren, wo die für den jeweils berechneten Teil notwendige Daten verfügbar sind, so dass entsprechende Technologien wie z.B. Grid-Computing oder Cloud-Computing zum Einsatz kommen können.

Ein weiterer wesentlicher Vorteil der vorliegenden Erfindung, der sich nicht direkt auf die Erhöhung der Simulationsgeschwindigkeit bezieht, liegt auch darin, dem Problem Rechnung zu tragen, dass die Simulationsgeschwindigkeit grundsätzlich von der gewählten Hardware des Anwenders abhängt. Aufgrund der Komplexität der virtuellen Maschine ist dabei nicht nur die erreichbare Performance schlecht vorab einschätzbar, sondern auch der Installations- und Anpassungsaufwand an eine bestimmte Konfiguration (z.B. verwendete Grafikkarte, Betriebssystem) ist in der Regel sehr hoch. Der erfindungsgemäße Ansatz liefert hier einen entscheidenden Beitrag, den Installations- und Anpassungsaufwand zu reduzieren, da die Rechenlast auch in einem lokalen oder entfernten Netzwerk bereitgestellt und/oder auf mehreren Rechnern installiert werden kann. Dabei ist es weiterhin möglich, lediglich die Bedienschnittstelle (Human Machine Interface HMI) auf dem Rechner des Anwenders auszuführen. Durch diese Maßnahmen wird der wesentliche Teil der Installation sowie die Ausführung der Gesamtsimulation nicht auf dem Rechnersystem des Anwenders gehalten, was die Abhängigkeiten der Systemkomponenten auf dem lokalen Rechner reduziert und die Installation auch im Update-Fall deutlich besser handhabbar macht.

Bei einem bevorzugten Ausführungsbeispiel des erfindungsgemäßen Verfahrens wird ein Bearbeitungsvorgang Werkzeug/Werkstück des Arbeitsprozesses an der Werkzeugmaschine in verschiedene Bearbeitungsabschnitte unterteilt. Dabei kann es sich um sequentielle Bearbeitungsabschnitte eines Werkstücks vom Rohteil über verschiedene Halbfertigstufen bis hin zum Fertigteil handeln.

Zusätzlich oder alternativ kann das Werkstück in verschiedene Teilvolumina unterteilt werden. Für die jeweiligen Bearbeitungsabschnitte werden dann Teilsimulationen durchgeführt, die sich wiederum auf Teilvolumina und/oder auf einzelne sequentielle Bearbeitungsabschnitte beziehen können.

Diese Unterteilung in Bearbeitungsabschnitte kann beispielsweise bereits im CAD/CAM-System erfolgen, in dem im CAM-System der Zustand des Werkstücks für den Beginn eines jeden Abschnitts bspw. in Form einer Geometrie ermittelt wird und dieser Zustand dann in einer 3D-Modell-Datei (z.B. VRL, IGES, step etc.) gespeichert wird.

Dabei kann bspw. der Post-Prozessor des CAM-Systems dazu eingerichtet sein, in im Voraus ausgewählten Bearbeitungsabschnitten oder in jedem Bearbeitungsabschnitt Einsprungsmarken in den NC-Steueranweisungen, d.h. direkt im NC-Programm, zu hinterlegen. Dabei kann es sich vorteilhafterweise um Zyklus- oder Textmarken handeln.

Dieses Ausführungsbeispiel sieht ferner die Schritte vor Übertragung der Bearbeitungsabschnitte anhand der entsprechenden Einsprungsmarken an verschiedene Prozessorkerne, Übertragen von dem jeweiligen Bearbeitungsabschnitt der NC-Steueranweisungen entsprechenden aktuellen Geometrien des Werkstückes an die verschiedenen Prozessorkerne und Durchführen von Teilsimulationen durch die verschiedenen Prozessorkerne. In anderen Worten werden die verfügbaren virtuellen Maschinen jeweils mit der Simulation eines Bearbeitungsabschnitts beauftragt, wofür dem Prozessorkern die jeweiligen Abschnitte des NC-Programms sowie die zugehörige aktuelle Geometrie des Halbfertigteils zur Verfügung gestellt wird.

Dieses Ausführungsbeispiel birgt den Vorteil, dass der Anwender bereits in der virtuellen Maschine vorgelagerten Teilen der Prozesskette bspw. im CAD/CAM-System Bearbeitungsabschnitte festlegen kann, die es dann ermöglichen, die virtuelle Maschine über das erfindungsgemäße Verfahren auf verschiedenen Prozessorkernen parallel arbeiten zu lassen.

Das erfindungsgemäße Konzept der Durchführung von Teilsimulationen von entsprechend vorher festgelegten Bearbeitungsabschnitten erlaubt in einfacher Weise eine Ergänzung zur Durchführung einer Kollisionserkennung. Erfindungsgemäß kann hierzu beispielsweise das Werkstück in verschiedene Teilvolumina unterteilt werden, für die dann einzelne virtuelle Teilsimulationen durchgeführt werden. Anschließend können zwischen diesen Teilvolumina Volumenschnittmengen gebildet werden, wobei dann im nächsten Simulationsdurchlauf von beispielsweise zwei miteinander verknüpften Volumina eine Kollisionserkennung durchgeführt wird. Im nächsten Schritt kann dann ein weiteres Volumen der Volumenschnittmenge hinzugefügt werden und die Kollisionserkennung kann erneut durchgeführt werden etc. bis hin zu dem fertig bearbeiteten Werkstück.

Des Weiteren können auch bereits im Rahmen der CAM-Analyse erzeugte Zwischenergebnisse für ein betreffendes Werkstück erzeugt werden, die dann auf verschiedenen virtuellen Maschinen im Rahmen entsprechender Teilsimulationen mit Kollisionserkennung abgearbeitet werden. Die Erfindung umfasst soweit auch eine zu diesem Zwecke modifizierte CAM-Software, die über eine entsprechende Funktionalität verfügt.

Es ist auch möglich, den Arbeitsprozess an der Werkzeugmaschine nach Funktionsabläufen verschiedener Systemkomponenten zu unterteilen und entsprechend Teilsimulationen von Funktionsabläufen für die verschiedenen Systemkomponenten durchzuführen.

Dabei ist es erfindungsgemäß möglich, den Arbeitsprozess direkt mit Hilfe der Virtuellen Werkzeugmaschine durch zweitweises Abschalten von Systemkomponenten und Teilsimulationen effizient zu unterteilen.

Ein diesem Ansatz folgendes Ausführungsbeispiels beinhaltet die Schritte Deaktivieren sämtlicher Funktionsabläufe mit Ausnahme der Systemkomponente zur Simulation der Werkzeugbahnen und der Systemkomponente zur Simulation des Abtragsmodells. Der virtuellen Maschine werden dabei zunächst nur Daten bezüglich der Rohteilgeometrie und die entsprechenden NC-Steueranweisungen zur Verfügung gestellt.

Darauf aufbauend werden zunächst auf einem ersten Prozessorkern Teilsimulationen der Systemkomponenten zur Simulation des Abtragsmodell und der Systemkomponente zur Simulation der Werkzeugbahnen in Abhängigkeit vorgegebener NC-Steueranweisungen und vorgegebener Rohteilgeometrien des Werkstücks durchgeführt.

Diese Teilsimulationen werden fortgeführt, wobei zu einem vorbestimmten Zeitpunkt t1 die im Abtragsmodell erreichte Geometrie des Werkstücks und der zugehörige Stand der NC-Steueranweisungen abgespeichert und auf einem zweiten Prozessorkern eine weitere vollständige Simulation des auf dem ersten Prozessorkern bereits abgelaufenen ersten Bearbeitungsabschnitts des Zeitintervalls t0 bis t1 gestartet wird unter Einbeziehung aller Systemkomponenten der gegebenen virtuellen Maschine.

Dieses Procedere kann entsprechend fortgeführt werden, indem beim Erreichen eines weiteren Zeitpunkts t2 bzw. weiterer Zeitpunkte (t3 bis tx) jeweils eine vollständige Simulation unter Einbeziehung aller Systemkomponenten der virtuellen Maschine auf einem dritten Prozessorkern bzw. weiteren Prozessorkernen für einen zweiten, dritten bis x-ten Bearbeitungsabschnitt gestartet wird.

Vorteilhafterweise können dabei die Zeitpunkte t1 bis tx so gewählt werden, dass sie mit einem Werkzeugwechsel korrelieren.

Weiter vorteilhaft ist es, eine Zerlegung in Bearbeitungsabschnitte in automatisierter Weise durchzuführen, wobei die NC-Steueranweisungen entsprechend der verfügbaren Anzahl an virtuellen Maschinen N auf verschiedene Prozessorkerne und in N-1 Bearbeitungsabschnitte verteilt wird, wobei ein Prozessorkern jeweils eine Teilsimulation eines bestimmten Zeitintervalls durchführt.

Die Erfindung schafft des weiteren ein System zur Simulation eines Arbeitsprozesses an einer Werkzeugmaschine mit einer virtuellen Maschine, die dazu eingerichtet ist, anhand von Maschinendaten, Werkstückdaten und Werkzeugdaten in Abhängigkeit von NC-Steuerdaten und SPS-Steuerdaten den Arbeitsprozess an der Werkzeugmaschine zu simulieren, wobei das System erfindungsgemäß als Plattform zur Simulation des Arbeitprozesses ausgeführt ist, die mehrere Prozessorkerne umfasst, wobei die Prozessorkerne dazu eingerichtet sind, Teilsimulationen des Arbeitsprozesses durchzuführen.

Bei einem vorteilhaften Ausführungsbeispiel umfasst das System einen Mehrkernprozessor, bei dem mehrere vollständige Prozessorkerne auf einem einzigen Chip integriert sind.

Die Plattform des erfindungsgemäßen Systems kann auch mehrere Prozessorkerne umfassen, die über ein Netzwerk miteinander verbunden sind.

Das erfindungsgemäße System kann bei einem bevorzugten Ausführungsbeispiel eine Einrichtung zum Unterteilen eines Bearbeitungsvorgangs des Arbeitprozesses an der Werkzeugmaschine in verschiedene sequentielle Bearbeitungsabschnitte eines Werkstücks. Dabei kann es sich um eine Einrichtung zur Unterteilung der Bearbeitungsschritte in verschiedene Stufen vom Rohteil über verschiedene Halbfertigteilstufen bis hin zum Fertigteil handeln. Die Einrichtung kann aber auch zum Unterteilen des Werkstücks in verschiedene Teilvolumina ausgestaltet sein.

Des Weiteren kann das System eine Einrichtung zum Ermitteln der Geometrie des Werkstücks für den Beginn eines jeden Bearbeitungsabschnitts eines vorgegebenen NC-Programms und zur Speicherung einer entsprechenden Werkstückgeometrie in einem 3D-Modell umfassen, sowie eine Einrichtung zum Hinterlegen von Einsprungsmarken am Beginn von vorausgewählten Bearbeitungsabschnitten in vorausgewählten NC-Anweisungen (d.h. dem NC-Programm) zur Bearbeitung des Werkstücks im Rahmen des Bearbeitungsvorgangs.

Das erfindungsgemäße System kann auch eine Einrichtung zum Unterteilen des Arbeitprozesses an der Werkzeugmaschine nach Funktionsabläufen verschiedener Systemkomponenten und Durchführen von Teilsimulationen von Funktionsabläufen für die verschiedenen Systemkomponenten umfassen.

Als nicht abschließende Beispiele für entsprechende Systemkomponenten können eine Systemkomponente zur Simulation einer Werkzeugbahn, eine Systemkomponente zur Simulation eines Abtragsmodells, eine Systemkomponente zur Simulation eines Schaltschrankmodells, eine Systemkomponente zur Simulation eines Arbeitsraummodells, eine Systemkomponente zur Simulation eines Antriebssystems, eine Systemkomponente zur Simulation von Pneumatik/Fluidysystemen, eine Systemkomponente zur Simulation von Spannmitteln, eine Systemkomponente zur Simulation von Werkzeugen und/oder Werkstücken, etc. in Betracht kommen.

Bei diesem Ausführungsbeispiel kann das System ferner eine Einrichtung zum Deaktivieren sämtlicher Funktionsabläufe umfassen, mit Ausnahme der Systemkomponente zur Simulation der Werkzeugbahnen und/oder der Systemkomponente zur Simulation des Abtragsmodells.

Das erfindungsgemäße System kann ferner eine Einrichtung zur Durchführung eines Fernzugriffs auf ein erfindungsgemäßes System beinhalten, die es beispielsweise einem Anwender ermöglicht, eine virtuelle Maschine zu konfigurieren, zu starten und/oder zu stoppen, ohne dass die Simulationsumgebung anwenderseitig fest installiert ist. Diese Ausführungsform birgt insbesondere den Vorteil, dass eine einfach wartbare Simulationsumgebung bereitgestellt wird, die lediglich im Zugriffsbereich beispielsweise des Maschinenherstellers liegt.

Weitere Vorteile und besondere Ausgestaltungen der vorliegenden Erfindung werden nachfolgend anhand der Figuren beschrieben, von denen
Fig. 1 ein erstes Ausführungsbeispiel eines erfindungsgemäßen Systems zur Simulation eines Arbeitsprozesses an einer Werkzeugmaschine auf der Basis eines Multi-Core-PCs;
Fig. 2 ein weiteres Ausführungsbeispiel eines erfindungsgemäßen Systems zur Simulation eines Arbeitsprozesses an einer Werkzeugmaschine basierend auf Einzelinstallationen, die über ein Netzwerk verknüpft sind;
Fig. 3 ein erstes Ausführungsbeispiel des erfindungsgemäßen Verfahrens zur Simulation eines Arbeitsprozesses an einer Werkzeugmaschine unter Verwendung einer virtuellen Maschine zeigen;
Fig. 4 ein weiteres Ausführungsbeispiel des erfindungsgemäßen Verfahrens zur Simulation eines Arbeitsprozesses an einer Werkzeugmaschine unter Verwendung einer virtuellen Maschine,
Fig. 5 ein Ausführungsbeispiel des erfindungsgemäßen Verfahrens zur Simulation eines Arbeitsprozesses an einer Werkzeugmaschine unter Verwendung von vier virtuellen Maschinen und mehreren Durchläufen zur Kollisionserkennung, und
Fig. 6 ein weiteres Ausführungsbeispiel des erfindungsgemäßen Verfahrens zur Simulation eines Arbeitsprozesses an einer Werkzeugmaschine unter Verwendung von vier virtuellen Maschinen, wobei im CAM-Programm die Zwischenergebnisse der Bearbeitungsabschnitte erzeugt werden, zeigen.

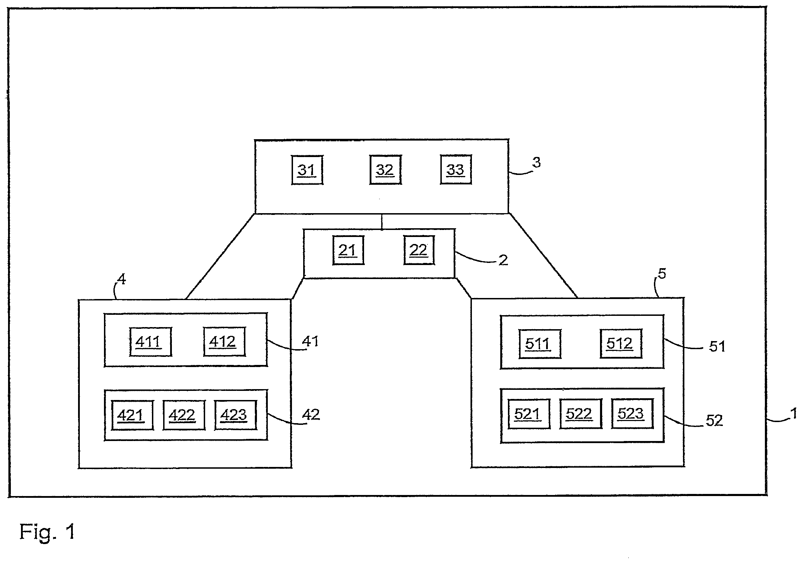

Bezug nehmend auf Fig. 1 wird ein erstes Ausführungsbeispiel eines erfindungsgemäßen Systems zur Simulation eines Arbeitsprozesses an einer Werkzeugmaschine unter Verwendung einer virtuellen Maschine beschrieben.

Bei diesem Ausführungsbeispiel wird das erfindungsgemäße System auf einem Multi-Core-PC mit mehreren selbständigen Prozessoren realisiert.

Der Multi-Core-PC 1 umfasst eine Mensch-Maschine-Schnittstelle 2 mit einem Bedienpult 21 zur Eingabe von Befehlen durch den Anwender und eine Anzeigeeinrichtung 22 zur Darstellung einer dreidimensionalen Simulation eines Arbeitsprozesses an der Werkzeugmaschine durch die virtuelle Maschine.

Das System umfasst ferner eine Speichereinrichtung 3 mit einem Speicherelement 31 zur Speicherung von Werkmaschinendaten, einem Speicherelement 32 zur Speicherung von Werkzeugdaten, und ein Speicherelement 33 zur Speicherung von Werkstückdaten, d.h. dem Rohmodell vor der Bearbeitung. Das Bezugszeichen 4 bezeichnet einen ersten Prozessor, auf dem eine Steuereinrichtung 41 umfassend das NC-Steuerprogramm 411 zur Beschreibung der Bahnen zum Abtrag von Material im Rahmen der spanenden Bearbeitung vom Rohteil bis hin zur Fertigteilgeometrie, sowie die SPS-Steuerung 412 für die maschinenspezifische Befehle installiert sind. Auf dem ersten Prozessor 4 ist zudem eine erste virtuelle Maschine 42 installiert, die ein Kinematikmodell 421, ein Abtragsmodell 422 sowie ein Schaltschrankmodell 423 umfasst.

Das in Fig. 1 gezeigte Ausführungsbeispiel ist ein Dual-Core-PC, der einen zweiten Prozessor 5 umfasst, mit einer Steuereinrichtung 51, die wiederum ein NC-Programm 511 und eine SPS-Maschinensteuerung 512 aufweist. Beim vorliegenden Ausführungsbeispiel der Fig. 1 sind die Steuerungen 41 und 51 bezüglich ihrer Funktionalität identisch und nur insofern in der Figur zweifach dargestellt, um zu illustrieren dass sie beide auf den Prozessoren 4 bzw. 5 installiert sind.

Die auf dem zweiten Prozessorkern 5 installierte virtuelle Maschine 52 weist ebenfalls ein Kinematikmodell 521 sowie ein Abtragsmodell 522 auf, die dem Kinematikmodell 421 und dem Abtragsmodell 422 entsprechen, da gleiches NC-Programm, gleiche Rohteilgeometrie und gleiche Maschinenkonfiguration verwendet wurden, da es sich um den gleichen Bearbeitungsvorgang handelt. Jedoch weist die zweite virtuelle Maschine 52 statt dem Schaltschrankmodell 423 ein Arbeitsraummodell 523 auf, das die Simulation des Arbeitsraums, umfassend Spannmittel, Tisch und Kabine ermöglicht.

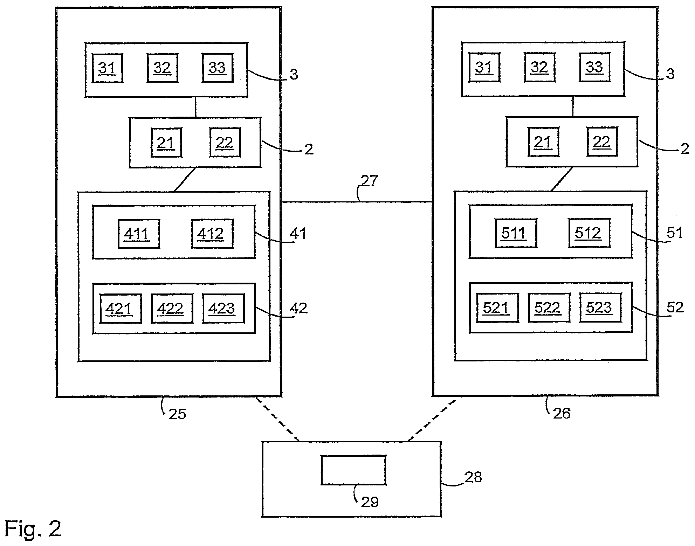

Fig. 2 zeigt ein weiteres Ausführungsbeispiel eines erfindungsgemäßen Systems zur Simulation eines Arbeitsprozesses an einer Werkzeugmaschine unter Verwendung von mehreren virtuellen Maschinen, die bei diesem Ausführungsbeispiel durch ein Netzwerk miteinander verbunden sind. Das Ausführungsbeispiel umfasst die Systeme 25 und 26, die über das Netzwerk 27 miteinander verbunden sind. Die Konfiguration der beiden Systeme 25 und 26 entspricht dabei der in Fig. 1 gezeigten Konfiguration, wobei gleiche Bezugszeichen gleiche Komponenten bezeichnen.

Bei dem Netzwerk 27 handelt es sich bei diesem Ausführungsbeispiel um das Internet, so dass auch eine räumliche Distanz zwischen den beiden Systemen 25 und 26 bei der Realisierung des erfindungsgemäßen Systems und Verfahrens möglich ist.

Darüber hinaus zeigt das Ausführungsbeispiel der Fig. 2 eine anwenderseitige Installation 28 mit Remote-Desktop 29, die es ermöglicht, über Fernzugriff auf die beiden Systeme 25 und 26 zuzugreifen. Über den Remote-Desktop 29 kann ein Anwender Simulationsabläufe konfigurieren, starten und stoppen, jedoch verbleibt die Installation der Simulationsumgebung in der Hand des Werkzeugmaschinenherstellers, was die Anbindung an die Hardware und das Einspielen von Upgrades im Rahmen der Wartung wesentlich vereinfacht. Selbstverständlich ist der Zugriff über ein Remote-Desktop 29 auf die Simulationsumgebung nicht auf das Ausführungsbeispiel der Fig. 2 beschränkt, sondern hier nur exemplarisch veranschaulicht. Ebenso kann ein derartiger Remote-Zugriff beim Ausführungsbeispiel der Fig. 1 oder anderen Ausführungsbeispielen realisiert werden.

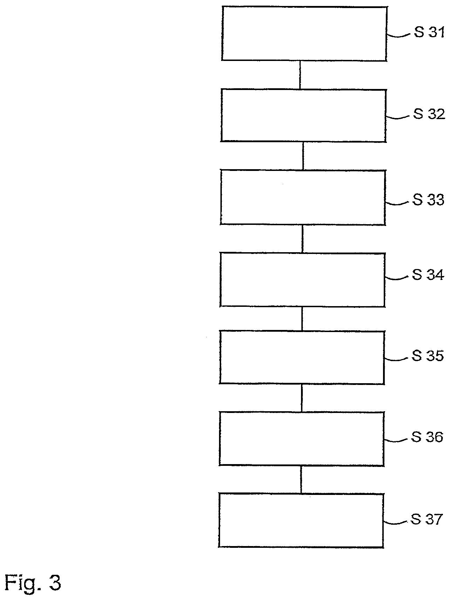

Fig. 3 zeigt ein erstes Ausführungsbeispiel des erfindungsgemäßen Verfahrens zur Simulation eines Arbeitsprozesses an einer Werkzeugmaschine unter Verwendung einer Mehrfachinstallation einer virtuellen Maschine.

In Schritt S31 wird zunächst in einem CAM-System der Zustand des Werkstücks für den Beginn eines jeden Bearbeitungsabschnittes ermittelt und in Schritt S32 in einer 3D-Modelldatei (beispielsweise in VRML, IGES, STEP-Format) abgespeichert.

In Schritt S33 wird durch den Post-Prozessor des CAM-Systems der Beginn eines jeden Bearbeitungsabschnittes durch Hinterlegen einer Einsprungmarke im NC-Programm gekennzeichnet. Bei dem vorliegenden Ausführungsbeispiel werden dabei entsprechende Textmarken eingefügt.

In Schritt S34 werden entsprechend gekennzeichnete Bearbeitungsabschnitte anhand der entsprechenden hinterlegten Einsprungsmarke an verschiedene Prozessorkerne, wie z. B. in Fig. 1 bzw. Fig. 2 dargestellt, übertragen. In Schritt S35 werden entsprechend dem jeweiligen Bearbeitungsabschnitt des NC-Programms die aktuellen Zwischenteil-Geometrien des Werkstücks an die Prozessorkerne übertragen, und in den Schritten S36 bzw. S37 werden auf verschiedenen Prozessorkernen Teilsimulationen durch die virtuellen Maschinen, die auf verschiedenen Prozessorkernen installiert sind, durchgeführt, wobei auf die übertragenen NC-Bearbeitungsabschnitte und auf die jeweils aktuelle Geometrie des Halbfertigteils zurückgegriffen wird.

Das in Fig. 3 gezeigte Ausführungsbeispiel des erfindungsgemäßen Verfahrens stellt somit ein Beispiel für die Unterteilung des Bearbeitungsvorgangs des Arbeitsprozesses und der Werkzeugmaschine in verschiedene sequentielle Bearbeitungsabschnitte eines Werkstücks vom Rohteil über verschiedene Halbfertigteilstufen bis hin zum Fertigteil dar, wobei die hintereinander folgenden Bearbeitungsabschnitte dann auf unterschiedlichen Prozessorkernen zeitgleich simuliert werden, um auf diese Weise die Simulationsgeschwindigkeit zu erhöhen.

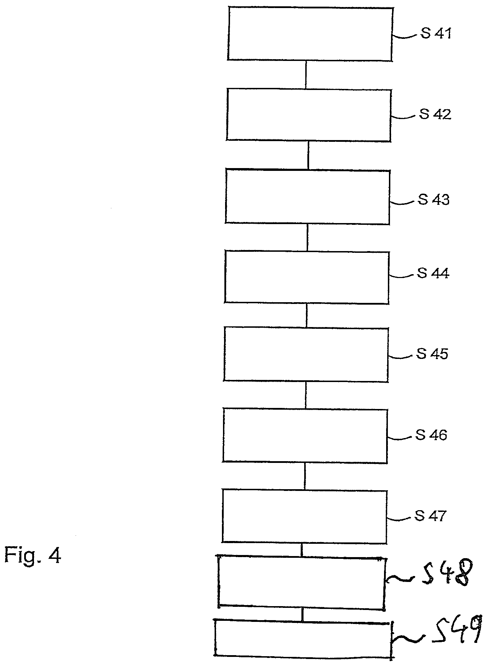

Hingegen veranschaulicht Fig. 4 ein weiteres Ausführungsbeispiel eines erfindungsgemäßen Verfahrens zur Simulation eines Arbeitsprozesses an einer Werkzeugmaschine unter Verwendung einer virtuellen Maschine, bei dem der Arbeitsprozess an der Werkzeugmaschine nach Funktionsabläufen verschiedener Systemkomponenten unterteilt wird und dann Teilsimulationen von Funktionsabläufen für verschiedene Systemkomponenten durchgeführt werden.

In Schritt S41 werden der virtuellen Maschine die Rohteilgeometrie sowie das NC-Programm zur Verfügung gestellt. In Schritt S42 werden sämtliche Funktionsabläufe mit Ausnahme der Systemkomponente zur Simulation der Werkzeugbahn und der Systemkomponente zur Simulation des Abtragsmodells deaktiviert, d.h. beispielsweise werden bei den in Fig. 1 gezeigten virtuellen Maschinen die Systemkomponenten 423 und 523 deaktiviert.

In Schritt S43 wird nun eine Teilsimulation auf einem ersten Prozessorkern gestartet, die die Simulation der Werkzeugbahnen zum Gegenstand hat und in Schritt S44 wird eine Simulation des Abtragsmodells gestartet in Abhängigkeit des vorgegebenen NC-Programms und der vorgegebenen Rohteilgeometrie des Werkstücks.

In Schritt S45 werden diese Simulationen bis zu einem vorbestimmten Zeitpunkt t1, der durch den Anwender festgelegt wird, fortgeführt und in Schritt S46 wird die zum vorbestimmten Zeitpunkt t1 erreichte Geometrie des Werkstücks im Abtragsmodell und der zugehörige Stand des NC-Programms gespeichert, hier mit der entsprechenden Zeilennummer des NC-Programms, wobei die in den Schritten S43 und S44 gestarteten Teilsimulationen weiterlaufen.

In Schritt S47 wird nun eine zweite virtuelle Maschine gestartet, welche für den ersten Bearbeitungsabschnitt von t0 bis t1 eine Simulation mit vollständiger Komplexität, d.h. mit allen der virtuellen Maschine zugehörigen Systemkomponenten, berechnet. Bei der in Fig. 1 gezeigten Ausführungsform sind dies beispielsweise die zusätzliche Systemkomponente 423 zur Simulation des Maschinenschranks bzw. die Komponente 523 zur Simulation des Arbeitsraums sein, wobei die Erfindung selbstverständlich nicht auf diese weiteren Systemkomponenten beschränkt ist, sondern grundsätzlich sämtliche Systemkomponenten, die Bestandteil der entsprechenden virtuellen Maschinen sind, mit beinhaltet sein können.

In Schritt S48 wird nun bei Erreichen eines weiteren Zeitpunkts t2 eine dritte virtuelle Maschine gestartet, die die vollständige Berechnung des zweiten Bearbeitungsabschnitts von t1 bis t2 durchführt.

In Schritt S49 wird bei Erreichen eines weiteren Zeitpunkts t3 eine vierte virtuelle Maschine gestartet, die die vollständige Berechnung eines dritten Bearbeitungsabschnitts von t2 bis t3 durchführt.

Bei dem gezeigten Ausführungsbeispiel der Fig. 4 stimmen die Zeitpunkte t1 bis t3 jeweils mit einem Werkzeugwechsel überein, womit auf diese Weise ein einfacher Einstieg in die Simulation des jeweiligen Bearbeitungsabschnitts erreicht werden kann. Erfindungsgemäß ist es dem Anwender freigestellt, die Einstiegspunkte entsprechend dem Anwendungsfall selbst festzulegen. Eine Automatisierung für einen ersten Durchlauf lässt sich beispielsweise dadurch erreichen, dass entsprechend den verfügbaren virtuellen Maschinen N das NC-Programm in N-1 Abschnitte zerlegt wird, da eine virtuelle Maschine für die vorausberechnende reduzierte Simulation benötigt wird.

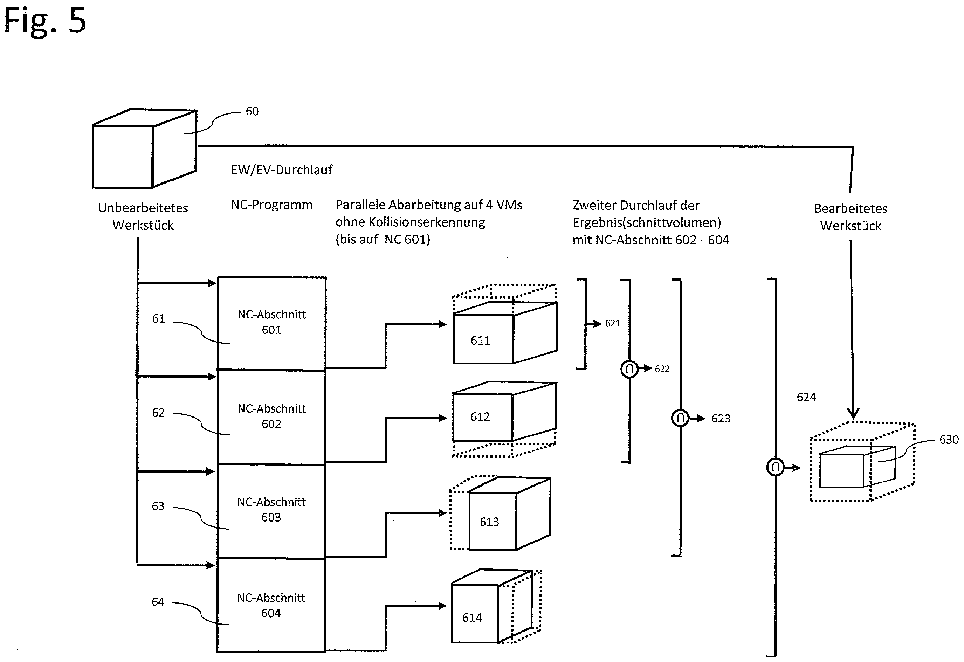

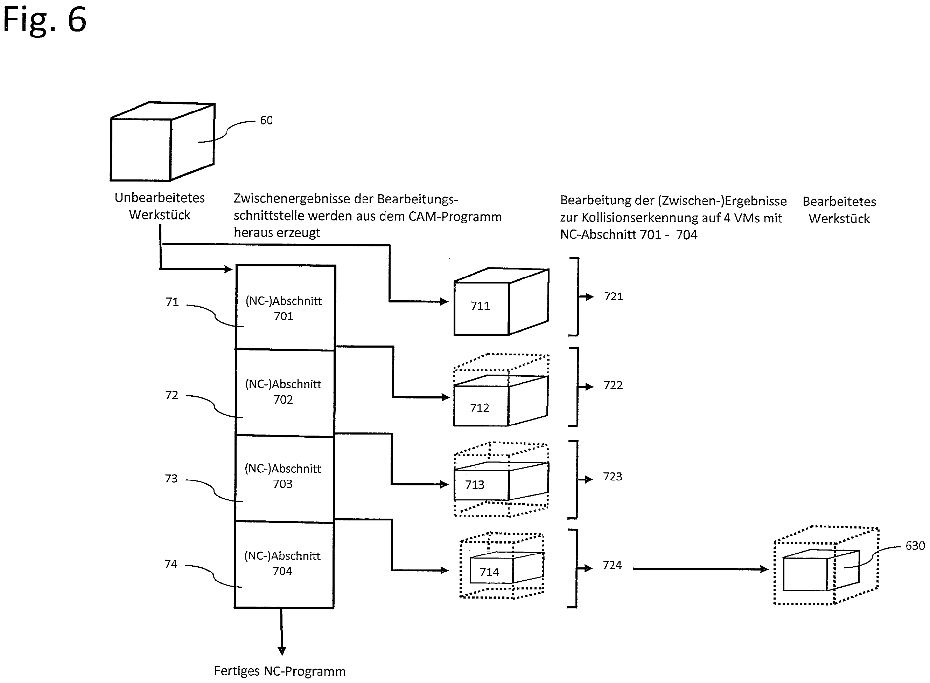

Die Ausführungsbeispiele der Fig. 5 und 6 veranschaulichen zwei grundsätzliche Möglichkeiten zur Integration einer Kollisionserkennung im Rahmen des Erfindungskonzeptes der parallelen virtuellen Maschine bei Ablauf von Teilsimulationen auf verschiedenen Prozessorkernen.

Fig. 5 zeigt ein Ausführungsbeispiel zur Bearbeitung eines Werkstücks 60 mittels vier verschiedener virtueller Maschinen 61 - 64, die jeweils auf unterschiedlichen Prozessorkernen (nicht dargestellt) laufen unter Verwendung entsprechender NC-Abschnitte 601 - 604. Die Darstellung veranschaulicht, dass durch die jeweiligen NC-Abschnitte 601 - 604 entsprechende Teilvolumina 611 - 614 abgearbeitet werden. Bei diesem Ausführungsbeispiel wird im ersten Durchlauf lediglich von der virtuellen Maschine 61 eine Kollisionserkennung 620 durchgeführt.

Im zweiten Durchlauf 622 - 624 werden entsprechende Volumenschnittmengen aus den Volumen 611 - 614 gebildet, und es erfolgt ein zweiter Durchlauf auf der jeweiligen virtuellen Maschine 62, 63, 64 (bis auf virtuelle Maschine 61) unter Durchführung einer Kollisionserkennung 622 - 624. Das in der Simulation fertig bearbeitete Werkstück 630 kann anschließend mit der CAD-Vorlage verglichen werden.

Der Vorteil bei diesem Ausführungsbeispiel besteht darin, dass beispielsweise ein Anwender zunächst ein vollständiges NC-Programm und entsprechende Werkstückinformationen z.B. an einen Verwaltungsserver mit virtuellen Maschinen, beispielsweise in einer virtuellen Maschinen-Cloud (z.B. via Internet), weiterleiten kann und dass dann dieser Verwaltungsserver das Werkstück und einen jeweiligen NC-Abschnitt an entsprechende virtuelle Maschinen 61 - 64 weiterleitet, um auf diese Weise ein geeignetes Load-Balancing bezüglich der Rechenleistung zu gewährleisten. Nach Ablauf der Simulation erfolgt dann im letzten Schritt eine Rückmeldung der entsprechenden virtuellen Maschinen 61 - 64 an den Verwaltungsserver mit dem fertig bearbeiteten Werkstück 630 einschließlich etwaiger Kollisionen oder Fehler. Ein Vorteil bei dieser Ausführungsform besteht darin, dass im Ablauf der virtuellen Maschine keine besondere ausgebildete CAD/CAM-Software verwendet werden muss, so dass anwenderseitig hier keine Modifikationen vonnöten sind.

Ein derartiges Beispiel unter Verwendung einer modifizierten CAD/CAM-Software zeigt das Ausführungsbeispiel der Fig. 6. Bei diesem Ausführungsbeispiel werden die Zwischenergebnisse der Bearbeitungsschritte direkt aus dem CAM-Programm heraus erzeugt, und es findet eine Bearbeitung der (Zwischen-) Ergebnisse zur Kollisionserkennung auf vier virtuellen Maschinen 71 - 74 mittels der NC-Abschnitte 701 - 704 in den Schritten 721 - 724 statt, in deren Folge das fertig bearbeitete Werkstück 630 resultiert.

Was die Computerarchitektur zur Realisierung dieser Parallelisierung der virtuellen Maschine bei diesem Ausführungsbeispiel anbetrifft, werden zunächst im CAM-Programm die Zwischenergebnisse des Werkstücks erzeugt, die dann mitsamt dem ursprünglichen Werkstück 60 beispielsweise an einen Verwaltungsserver übersendet werden können, der das Werkstück bzw. die Zwischenergebnisse und zugehörige NC-Abschnitte 701 - 704 an entsprechende virtuelle Maschinen 71 - 74 verteilt. Diese virtuellen Maschinen 71 - 74 arbeiten dann die betreffenden Werkstückvolumina mit Kollisionserkennung ab und leiten die Ergebnisse beispielsweise an den Verwaltungsserver zurück, so dass im Ergebnis ein fertig bearbeitetes Werkstück 630 vorliegt, das wiederum mit der CAD-Vorlage verglichen werden kann.

Die Erfindung ist nicht auf die oben gezeigten Ausführungsbeispiele beschränkt, vielmehr können die beschriebenen Merkmale zu weiteren Ausführungsbeispielen kombiniert werden, um für einen spezifischen Anwendungsfall eine optimierte Ausführungsform auf der Basis des Wissens des Fachmanns zu erstellen.

## Patentansprüche

1. Verfahren zur Simulation eines Arbeitsprozesses an einer Werkzeugmaschine unter Verwendung einer virtuellen Maschine, die dazu eingerichtet ist, anhand von Maschinendaten, Werkstückdaten und Werkzeugdaten in Abhängigkeit von NC-Steuerdaten und SPS-Steuerdaten den Arbeitsprozess an der Werkzeugmaschine zu simulieren, umfassend die Schritte:
- Unterteilen des Arbeitsprozesses an der Werkzeugmaschine nach Funktionsabläufen verschiedener Systemkomponenten und Durchführen von Teilsimulationen von Funktionsabläufen für die verschiedenen Systemkomponenten auf einer Plattform, die mehrere Prozessorkerne umfasst, wobei die Teilsimulation des Arbeitsprozesses in Teilsimulationen auf unterschiedlichen Prozessorkernen parallel ablaufen und die folgenden Schritte durchgeführt werden:
- Deaktivieren sämtlicher Funktionsabläufe mit Ausnahme der Systemkomponente zur Simulation der Werkzeugbahnen und der Systemkomponente zur Simulation des Abtragsmodells und
- Durchführen von Teilsimulationen auf einem ersten Prozessorkern durch Starten der Systemkomponente zur Simulation von Werkzeugbahnen,
- Starten der Systemkomponente zur Simulation des Abtragsmodells in Abhängigkeit vorgegebener NC-Steueranweisungen und einer vorgegebenen Rohteilgeometrie des Werkstücks,
- Fortführen der Teilsimulation zur Simulation der Werkzeugbahnen und der Teilsimulation zur Simulation des Abtragsmodells eines ersten Bearbeitungsabschnitts t0 bis t1,
- Abspeichern der zu einem vorbestimmten Zeitpunkt t1 im Abtragsmodell erreichten Geometrie des Werkstücks und den zugehörigen Stand der NC-Steueranweisungen,
- Starten einer vollständigen Simulation unter Einbeziehung aller Systemkomponenten der virtuellen Maschine auf einem zweiten Prozessorkern für den ersten Bearbeitungsabschnitt des Intervalls t0 bis t1, und
- Starten einer vollständigen Simulation unter Einbeziehung aller Systemkomponenten der virtuellen Maschine auf einem dritten Prozessorkern für einen zweiten Bearbeitungsabschnitt t1 bis t2 und gegebenenfalls für dritte bis x-te Bearbeitungsabschnitte auf weiteren Prozessorkernen beim Erreichen eines bestimmten Zeitpunkts t2 bzw. weiterer bestimmter Zeitpunkte t3 bis tx.

2. Verfahren nach dem Patentanspruch 1,
**dadurch gekennzeichnet, dass** die Zeitpunkt T1 bis Tx so gewählt werden, dass sie mit einem Werkzeugwechsel korrelieren.

3. Verfahren nach einem der Patentansprüche 1 oder 2,
**dadurch gekennzeichnet, dass** die Zerlegung in Bearbeitungsabschnitte in automatisierter Weise erfolgt, wobei die Steueranweisungen entsprechend der verfügbaren Anzahl an virtuellen Maschinen N, die auf verschiedenen Prozessorkernen installiert sind, in n-1 Bearbeitungsabschnitte zerlegt wird, wobei ein Prozessorkern die im Patentanspruch 1 beschriebenen Teilsimulationen durchführt.

4. Verfahren nach einem der vorhergehenden Patentansprüche,
**dadurch gekennzeichnet, dass**
die Plattform einen Mehrkernprozessor umfasst, bei dem mehrere vollständige Prozessorkerne auf einem einzigen Chip integriert sind.

5. Verfahren nach einem der vorhergehenden Patentansprüche,
**dadurch gekennzeichnet, dass**
die Plattform mehrere Prozessorkerne umfasst, die über ein Netzwerk miteinander verbunden sind.

6. System zur Simulation eines Arbeitsprozesses an einer Werkzeugmaschine unter Verwendung einer virtuellen Maschine, die dazu eingerichtet ist, anhand von Maschinendaten, Werkstückdaten und Werkzeugdaten in Abhängigkeit von NC-Steuerdaten und SPS-Steuerdaten den Arbeitsprozess an der Werkzeugmaschine zu simulieren, wobei
das System als Plattform ausgeführt ist, die mehrere Prozessorkerne umfasst, wobei die Prozessorkerne dazu eingerichtet sind, Teilsimulationen gemäß Patentanspruch 1 durchzuführen.

7. System nach Patentanspruch 6,
**dadurch gekennzeichnet, dass**
die Plattform einen Mehrkernprozessor umfasst, bei dem mehrere vollständige Prozessorkerne auf einem einzigen Chip integriert sind.

8. System nach Patentanspruch 7,
**dadurch gekennzeichnet, dass**
die Plattform mehrere Prozessorkerne umfasst, die über ein Netzwerk miteinander verbunden sind.

## Claims

1. A method for simulating a work process on a machine tool using a virtual machine configured to simulate said work process on said machine tool using machine data, workpiece data, and tool data as a function of NC control data and PLC control data, said method comprising the steps of:
- subdividing said work process on said machine tool according to functional sequences of various system components and carrying out partial simulations of functional sequences for the various system components on a platform comprising a plurality processor cores, wherein the simulation of said work process is performed in parallel in partial simulations on different processor cores and the following steps are carried out:
- deactivating all functional sequences with the exception of the system component to simulate tool paths and the system component to simulate a material-removal model, and
- carrying out partial simulations on a first processor core by starting the system component to simulate tool paths,
- starting the system component to simulate the material-removal model as a function of predefined NC control instructions and a predefined unmachined part geometry of the workpiece,
- continuing the partial simulation to simulate the tool paths and the partial simulation to simulate the material-removal model for a first machining portion t0 to t1,
- storing the workpiece geometry obtained at a predefined time t1 in the material-removal model and the associated status of the NC control instructions,
- starting a full simulation incorporating all system components of the virtual machine on a second processor core for the first machining portion of the interval t0 to t1, and
- starting a full simulation incorporating all system components of the virtual machine on a third processor core for a second machining portion t1 to t2 and, if applicable, for third to xth machining portions on additional processor cores when a specific time t2 or further specific times t3 to tx is/are reached.

2. The method according to claim 1,
**characterized in that** the times T1 to Tx are selected such that they correlate to a tool change.

3. The method according to one of claims 1 or 2,
**characterized in that** the division into machining portions is performed automatically, the control instructions being divided into n-1 machining portions according to the available number of virtual machines N installed on different processor cores, wherein one processor core performs the partial simulations described in claim 1.

4. The method according to one of the preceding claims,
**characterized in that**
said platform comprises a multi-core processor in which a plurality of complete processor cores are integrated in a single chip.

5. The method according to one of the preceding claims,
**characterized in that**
said platform comprises a plurality of processor cores interconnected via a network.

6. A system for simulating a work process on a machine tool using a virtual machine configured to simulate the work process on the machine tool using machine data, workpiece data, and tool data as a function of NC control data and PLC control data, wherein
the system is configured as a platform comprising a plurality of processor cores, and wherein said processor cores are configured to perform partial simulations according to claim1.

7. The system according to claim 6,
**characterized in that**
said platform comprises a multi-core processor in which a plurality of complete processor cores are integrated in a single chip.

8. The system according to claim 7,
**characterized in that**
said platform comprises a plurality of processor cores interconnected via a network.

## Revendications

1. Procédé destiné à simuler un processus de travail sur une machine-outil en utilisant une machine virtuelle qui est configurée pour simuler le processus de travail sur la machine-outil à partir de données de machine, de données de pièce à usiner et de données d'outil et en fonction de données de commande à commande numérique et de données de commande à mémoire programmable, comprenant les étapes de :
- subdivision du processus de travail sur la machine-outil selon des séquences fonctionnelles de différents composants de système et exécution de simulations partielles de séquences fonctionnelles pour les différents composants de système sur une plate-forme qui comprend plusieurs cœurs de processeur, dans lequel la simulation partielle du processus de travail se déroule parallèlement en des simulations partielles sur différents cœurs de processeur et les étapes suivantes sont réalisées :
- désactivation de toutes les séquences fonctionnelles à l'exception des composants de système pour la simulation des trajectoires d'outil et des composants de système pour la simulation du modèle d'enlèvement et
- exécution des simulations partielles sur un premier cœur de processeur en démarrant les composants de système pour la simulation de trajectoires d'outil,
- démarrage des composants de système pour la simulation du modèle d'enlèvement en fonction d'instructions de commande à commande numérique prédéfinies et d'une géométrie d'ébauche prédéfinie de la pièce à usiner,
- continuation de la simulation partielle pour la simulation des trajectoires d'outil et de la simulation partielle pour la simulation du modèle d'enlèvement d'une première section d'usinage t0 à t1,
- mémorisation de la géométrie de la pièce à usiner atteinte à un instant t1 prédéfini dans le modèle d'enlèvement et de l'état afférent des instructions de commande à commande numérique,
- démarrage d'une simulation complète en tenant compte de tous les composants de système de la machine virtuelle sur un deuxième cœur de processeur pour la première section d'usinage de l'intervalle t0 à t1, et
- démarrage d'une simulation complète en tenant compte de tous les composants de système de la machine virtuelle sur un troisième cœur de processeur pour une deuxième section d'usinage t1 à t2 et le cas échéant pour des troisième à x^{ème} sections d'usinage sur d'autres cœurs de processeur lorsqu'à été atteint un instant t2 déterminé ou d'autres instants t3 à tx déterminés.

2. Procédé selon la revendication 1,
**caractérisé en ce que** les instants T1 à Tx sont sélectionnés de façon à être corrélés à un changement d'outil.

3. Procédé selon l'une des revendications 1 ou 2,
**caractérisé en ce que** la décomposition en sections d'usinage s'effectue de façon automatisée, dans lequel les instructions de commande sont décomposées en n-1 sections d'usinage en fonction du nombre disponible de machines virtuelles N qui sont installées sur différents cœurs de processeur, dans lequel un cœur de processeur exécute les simulations partielles décrites dans la revendication de brevet 1.

4. Procédé selon l'une des revendications précédentes,
**caractérisé en ce que**
la plate-forme comprend un processeur multicœur où plusieurs cœurs de processeur complets sont intégrés sur une seule puce.

5. Procédé selon l'une des revendications précédentes,
**caractérisé en ce que**
la plate-forme comprend plusieurs cœurs de processeur qui sont reliés ensemble via un réseau.

6. Système destiné à simuler un processus de travail sur une machine-outil en utilisant une machine virtuelle qui est configurée pour simuler le processus de travail sur la machine-outil à partir de données de machine, de données de pièce à usiner et de données d'outil et en fonction de données de commande à commande numérique et de données de commande à mémoire programmable, dans lequel
le système est conçu en tant que plate-forme qui comprend plusieurs cœurs de processeur, dans lequel les cœurs de processeur sont configurés pour exécuter des simulations partielles selon la revendication 1.

7. Système selon la revendication 6,
**caractérisé en ce que**
la plate-forme comprend un processeur multicœur où plusieurs cœurs de processeur complets sont intégrés sur une seule puce.

8. Système selon la revendication 7,
**caractérisé en ce que**
la plate-forme comprend plusieurs cœurs de processeur qui sont reliés ensemble via un réseau.
